# EUROPÄISCHE PATENTSCHRIFT

(11) **EP 3 041 718 B1**
(45) Veröffentlichungstag und Bekanntmachung des Hinweises auf die Patenterteilung: **25.11.2020**
(21) Anmeldenummer: 14733994.9
(22) Anmeldetag: 14.06.2014
(51) Int. Cl.: B60T 8/172, B60T 8/17

(54) **VERFAHREN ZUR STEUERUNG EINES ELEKTRONISCHEN BREMSSYSTEMS**
METHOD OF CONTROLLING AN ELECTRONIC BRAKING SYSTEM
PROCÉDÉ DE COMMANDE D'UN SYSTÈME DE FREINAGE ÉLECTRONIQUE

(30) Priorität: 04.09.2013 DE 102013014672
(43) Veröffentlichungstag der Anmeldung: 13.07.2016
(73) Patentinhaber: WABCO GmbH, 30453 Hannover (DE)
(72) Erfinder: CZAJA, Daniel, 30419 Hannover (DE); DIERS, Hauke, 31275 Lehrte (DE); STENDER, Axel, 31787 Hameln (DE); WOLF, Markus, 31137 Hildesheim (DE)
(74) Vertreter: Lauerwald, Jörg
(86) Internationale Anmeldenummer: PCT/EP2014/001621
(87) Internationale Veröffentlichungsnummer: WO 2015/032457

(56) Entgegenhaltungen:
- GB-A- 2 497 131
- GB-A- 2 497 131
- JP-A- H09 144 587
- US-A- 4 926 683
- US-A- 4 926 683
- US-A1- 2003 214 185
- US-A1- 2011 006 591
- US-A1- 2011 006 591

## Beschreibung

Die Erfindung betrifft ein Verfahren zur Steuerung eines elektronischen Bremssystems. Außerdem betrifft die Erfindung ein Steuergerät und ein elektronisches Bremssystem.

Moderne Nutzfahrzeuge mit pneumatischen Bremsen weisen außerdem ein elektronisches Bremssystem auf, das unter anderem eine Antiblockierfunktion beinhaltet. Ein elektronisches Bremsensteuergerät (EBS-ECU) verarbeitet Signale von Raddrehzahlsensoren und greift ggf. in die Betätigung der Bremsen ein.

Das elektronische Bremssystem erfüllt weitere Funktionen. Hierzu können die Signale weiterer Sensoren ausgewertet werden. Die weiteren Sensoren können in das Bremsensteuergerät integriert sein, über Leitungen unmittelbar an das Bremsensteuergerät angeschlossen sein oder Signale weiterer Sensoren werden über ein Datenbussystem - etwa einen CAN-Datenbus - an das Bremsensteuergerät übermittelt. Ein Querbeschleunigungssensor ist vorzugsweise in das Bremsensteuergerät integriert. Bei pneumatisch gefederten Fahrzeugen erfasst ein Balgdrucksensor die Höhe der Beladung oder Achslast. Bei mechanisch gefederten Fahrzeugen können zu demselben Zweck Federwegsensoren vorgesehen sein.

Anhängefahrzeuge können mit einem eigenen elektronischen Bremssystem und/oder einem Bremsensteuergerät ausgestattet sein. Das elektronische Bremssystem des Anhängerfahrzeugs ist mit dem korrespondierenden System des Zugfahrzeugs über eine genormte Steckverbindung verbunden. In die Steckverbindung integriert oder zusätzlich vorhanden sein kann eine Datenbusverbindung. Dadurch können im Zugfahrzeug gewonnene Signale an das Anhängefahrzeug übergeben werden.

Aus Sicherheitsgründen werden ein Fehler vermutet und eine Fehlermeldung ausgegeben, wenn nach Ablauf einer bestimmten Zeitspanne nach Einschalten des elektronischen Bremssystems keine Signale von den Raddrehzahlsensoren geliefert werden. Beispielsweise können die Raddrehzahlsensoren defekt sein, nicht richtig eingesetzt sein oder Kabelverbindungen defekt sein. Tatsächlich muss nicht in jedem Fall ein Fehler vorliegen. So können durchaus längere Stillstandszeiten mit eingeschaltetem elektronischem Bremssystem und ohne eingelegte Feststellbremse auftreten, z. B. bei einem Werkstattaufenthalt oder aus anderen Gründen.

Sofern ein Fahrzeug Liftachsen aufweist und diese mit Raddrehzahlsensoren ausgestattet sind, kann der Fall auftreten, dass das Fahrzeug in Fahrt ist, die betreffenden Raddrehzahlsensoren wegen der angehobenen Achsen korrekterweise keine Signale übertragen und trotzdem eine Fehlermeldung erzeugt wird, da innerhalb der definierten Zeitspanne mit Signalen der Raddrehzahlsensoren gerechnet wird.

GB2497131 A offenbart ein elektronisches Bremssystem für ein Anhängefahrzeug, welches eine Funktion beinhaltet, die ein sicheres Abstellen des Anhängefahrzeuges auf einer schiefen Ebene ermöglicht.

DE 3903071 C2 offenbart ein Verfahren zum Prüfen der Radgeschwindigkeitssensoren eines Antiblockierregelsystems auf einem Rollenprüfstand für ein Motorfahrzeug mit einem Satz Räder, einer Radbremse für jedes Rad und einer hydraulischen Einheit, die eine Druckbeaufschlagung mit Fluiddruck entsprechend einer vorbestimmten Folge von Signalen vom Antiblockierregelsystem ausführt, welches mehrere Radgeschwindigkeitssensoren zum Erfassen der Drehzahl jedes Rades aufweist.

Aus der US 2003/0214185 A1 ist ein System zur Steuerung einer Bremsausrüstung eines Kraftfahrzeugs bekannt. Ein Raddrehzahlsensor erfasst die Drehzahlen einzelner oder mehrerer Räder. Bei Stillstand des Fahrzeugs sollen Bremskräfte aufgebaut werden um das Fahrzeug im Stillstand zu halten. Dabei wird aufgrund von Fahrzeugbewegungen ermittelt, ob sich das Fahrzeug im Stillstand befindet. Hierzu erfasst ein Neigungssensor Neigungen und Bewegungen des Fahrzeugs um eine Querachse oder Längsachse. Außerdem wird überprüft, ob ein vom Fahrer erzeugter Bremsdruck größer ist als ein Referenzbremsdruck.

Aufgabe der vorliegenden Erfindung ist es, Fahrt und/oder Stillstand des Fahrzeugs unabhängig von den Signalen der Raddrehzahlsensoren zu erkennen. Insbesondere sollen Fehlersignale vermieden werden, wenn kein Fehler vorliegt.

Zur Lösung der Aufgabe weist das erfindungsgemäße Verfahren die Merkmale des Anspruchs 1 auf. In dem Verfahren zur Steuerung eines elektronischen Bremssystems für Fahrzeuge, insbesondere für Anhängefahrzeuge, werden Signale von Raddrehzahlsensoren verarbeitet. Für die Erkennung von Fahrt und/oder Stillstand werden jedoch zumindest Signale eines oder mehrerer Sensoren verarbeitet, die nicht Raddrehzahlsensoren sind, wobei für die Erkennung von Fahrt und/oder Stillstand Signale eines oder mehrerer Beladungssensoren verarbeitet werden. Zusätzlich können auch die Signale der Raddrehzahlsensoren herangezogen werden.

Erfindungsgemäß können die Signale der Sensoren, die nicht Raddrehzahlsensoren sind, verarbeitet werden, um Signale der Raddrehzahlsensoren oder daraus abgeleitete Fehlermeldungen zu verifizieren. Das heißt insbesondere, dass die Signale der weiteren Sensoren (die nicht Raddrehzahlsensoren sind) Fehlermeldungen wegen ausbleibender Signale der Raddrehzahlsensoren beeinflussen oder blockieren können.

Nach einem weiteren Gedanken der Erfindung können für die Erkennung von Fahrt und/oder Stillstand Signale von mindestens einem Balgdrucksensor und/oder von mindestens einem Wegsensor als Signale eines oder mehrerer Beladungssensoren verarbeitet werden. Balgdrucksensoren detektieren die Achslast bei pneumatischer Federung, während Wegsensoren den Federweg einer mechanischen Federung aufnehmen und so Beladung und/oder Achslast detektieren. Es können auch die Wegsensoren von elektronisch geregelten Luftfederungssystemen zur Erkennung verwendet werden.

Die Beladungssensoren erzeugen bei fahrendem Fahrzeug ein Signal mit deutlich höherer Amplitude als bei stehendem Fahrzeug. Entsprechend lässt sich aus den Signalen erkennen, ob das Fahrzeug in Fahrt ist oder still steht. Bei angehobenen Liftachsen wird keine Beladung oder Achslast mehr angezeigt. Es liegt ein deutlicher Offset im Verhältnis zum Signal einer nicht angehobenen Liftachse vor. Wenn keine Beladung oder Achslast angezeigt wird, kann damit eine Fehlermeldung wegen ausbleibender Signale der Raddrehzahlsensoren korrigiert oder unterdrückt werden.

Nach einem weiteren Gedanken der Erfindung ist vorgesehen, dass für die Erkennung von Fahrt und/oder Stillstand Signale eines oder mehrerer Beschleunigungssensoren verarbeitet werden, insbesondere von einem Querbeschleunigungssensor. In modernen Bremsensteuergeräten für elektronische Bremssysteme ist ein Querbeschleunigungssensor bereits vorhanden. Das Signal braucht nur für die genannte Aufgabe ausgewertet werden. Möglich ist auch die Verwendung der Signale von Beschleunigungssensoren in Richtung anderer Achsen, etwa für Bewegungen entlang einer Längsachse oder Hochachse des Fahrzeugs. Typischerweise treten bei einem Fahrzeug in Fahrt charakteristisch andere bzw. höhere Beschleunigungswerte auf, als bei einem still stehenden Fahrzeug.

Erfindungsgemäß können für die Erkennung von Fahrt und/oder Stillstand auch Signale eines oder mehrerer Bremsdrucksensoren verarbeitet werden. Sofern beispielsweise der Bremsdruck nicht höher ist als ein Vorratsdruck, wird grundsätzlich von einem Stillstand ausgegangen.

Nach einem weiteren Gedanken der Erfindung können für die Erkennung von Fahrt und/oder Stillstand Signale verarbeitet werden, welche dem Fahrzeug über eine Schnittstelle von einem verbundenen Fahrzeug zugeführt werden. So erhält ein Anhängefahrzeug mit elektronischem Bremssystem über eine genormte Schnittstelle Informationen über die Geschwindigkeit des Zugfahrzeugs und kann diese Signale im eigenen Bremsensteuergerät verarbeiten.

Vorteilhafterweise werden Amplitude und/oder Frequenz von Signalen der Sensoren ausgewertet, die nicht Raddrehzahlsensoren ist. Amplitude und Frequenz bei Stillstand des Fahrzeugs sind bekannt oder für jeden Fahrzeugtyp leicht ermittelbar. Abweichungen davon weisen auf einen Fahrtzustand des Fahrzeugs hin.

Im Rahmen der Erfindung kann vorgesehen sein, dass das Fahrzeug ein Anhängefahrzeug ist, bei dem alle Achsen liftbar sind. Ein derartiges Anhängefahrzeug wird typischerweise mit einem starr verbundenen, nachfolgenden Anhängefahrzeug verwendet. Beide Anhängefahrzeuge weisen ein eigenes elektronisches Bremssystem mit Bremsensteuergerät und Raddrehzahlsensoren auf.

Gegenstand der Erfindung ist auch ein Steuergerät für ein elektronisches Bremssystem, mit Eingängen oder Schnittstellen für Signale von Raddrehzahlsensoren und mit Eingängen oder Schnittstellen für Signale von weiteren Sensoren, zur Durchführung des erfindungsgemäßen Verfahrens. Ebenfalls Gegenstand der Erfindung ist ein elektronisches Bremssystem für ein Fahrzeug, insbesondere für ein Anhängefahrzeug, mit einem Steuergerät nach Anspruch 9, Raddrehzahlsensoren und weiteren Sensoren, wobei Signale der Raddrehzahlsensoren verarbeitet werden, und wobei für eine Erkennung von Fahrt und/oder Stillstand zumindest Signale eines oder mehrerer Sensoren verarbeitet werden, die nicht Raddrehzahlsensoren sind, wobei für die Erkennung von Fahrt und/oder Stillstand Signale eines oder mehrerer Beladungssensoren verarbeitet werden.

Bevorzugte Anwendung der Erfindung ist ein elektronisches Bremssystem in einem Fahrzeug, welches daneben ein pneumatisches, hydraulisches oder anderes Bremssystem aufweist.

Weitere Merkmale der Erfindung ergeben sich aus der Beschreibung im Übrigen und aus den Ansprüchen.

Vorteilhafte Ausführungsbeispiele der Erfindung werden nachfolgend anhand von Zeichnungen erläutert. Es zeigen:
- Fig. 1, 2 und 3: eine Zugmaschine mit teilbarem Sattelanhänger,
- Fig. 4: den Ausdruck von Signalen eines Balgdrucksensors in einem Anhängefahrzeug mit elektronischem Bremssystem und pneumatischer Federung, insbesondere im vorderen Fahrzeugteil des in den Fig. 1 bis 3 gezeigten Sattelanhängers.

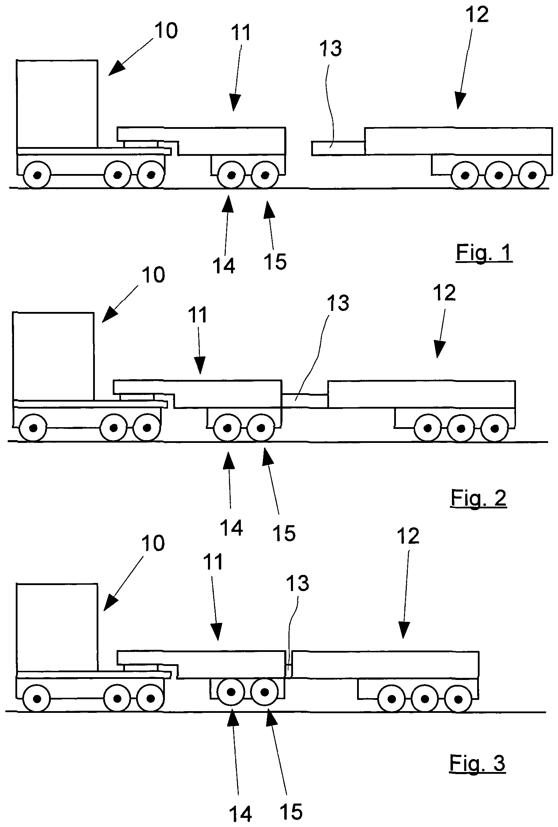

In Fig. 1 erkennbar ist ein Sattelzug mit einer Zugmaschine 10, einem vorderen Anhängerteil 11 und einem hinteren Anhängerteil 12. Der vordere Anhängerteil 11 ist als Sattelauflieger ausgebildet. Der hintere Anhängerteil 12 ist starr mit dem vorderen Anhängerteil 11 verbindbar, siehe Fig. 3. Hierzu wird eine starre Deichsel 13 des hinteren Anhängerteils 12 in eine passende Aufnahme des vorderen Anhängerteils 11 eingeschoben, siehe Abfolge der Fig. 1, 2 und 3. Dieser Typ eines teilbaren Sattelanhängers wird auch als Combitrailer bezeichnet.

Typischerweise ist jeder der beiden Anhängerteile 11, 12 so dimensioniert, dass jeweils ein 20-Fuß-Container aufgenommen werden kann. Zusammengesteckt zum Combitrailer kann ein 40 Fuß-Container aufgenommen werden. Der vordere Anhängerteil 11 weist ein oder zwei Liftachsen 14, 15 auf, die bei unbeladenem Combitrailer geliftet sind. Räder der Liftachsen 14, 15 haben dann keinen Bodenkontakt.

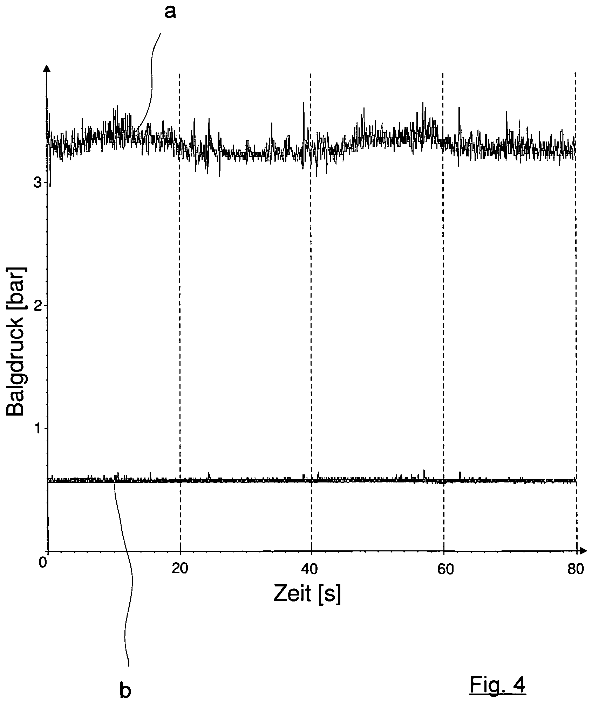

Beide Anhängerteile 11, 12 sind jeweils mit einem eigenen elektronischen Bremssystem ausgerüstet. Letzteres weist jeweils ein Steuergerät auf, welches Signale von angeschlossenen Raddrehzahlsensoren und Balgdrucksensoren verarbeitet. Fig. 4 zeigt beispielhafte Verläufe a und b für den Balgdruck des vorderen Anhängerteils 11.

Der Balgdruckverlauf a ist ein Beispiel für den Balgdruck bei abgesenkten Liftachsen 14, 15. Erkennbar ist ein Offset von etwa 3,3 bar (Überdruck) mit Schwankungen der Amplitude von 3 bar bis 3,7 bar.

Der Balgdruckverlauf b tritt bei gelifteten Achsen 14, 15 auf. Der Balgdruck beträgt etwa 0,6 bar bei nur geringen Schwankungen bis maximal 0,7 bar.

Das elektronische Bremssystem von Anhängefahrzeugen prüft typischerweise die Funktion der Raddrehzahlsensoren. Nach Einschalten des elektronischen Bremssystems, spätestens beim Starten eines angeschlossenen Zugfahrzeugs, werden vom Steuergerät Geschwindigkeitssignale der Raddrehzahlsensoren erwartet. Sofern die Signale ausbleiben, wird nach Ablauf einer bestimmten Zeit (z. B. 30 Minuten) eine Störungsmeldung an den Fahrer übermittelt. Es wird dann davon ausgegangen, dass die Raddrehzahlsensoren ausgefallen sind, nicht funktionieren oder nicht ordnungsgemäß angeschlossen sind.

Bei gelifteten Achsen 14, 15 des vorderen Anhängerteils 11 wird die beschriebene Störungsmeldung nach Ablauf der bestimmten Zeit vom Steuergerät generiert. Um dies zu vermeiden, werden die Signale des Balgdrucksensors mit ausgewertet. Der Balgdruckverlauf b wird erkannt. Der Balgdruck liegt unter einem vorher definierten Grenzwert von beispielsweise 1 bar und weist nur sehr geringe Schwankungen auf. Es wird deshalb von gelifteten Achsen ausgegangen und die Störungsmeldung unterdrückt.

Bei abgesenkten Liftachsen 14, 15 des vorderen Fahrzeugteils 11 erkennt das Steuergerät anhand des Balgdruckverlaufs a und der damit verbundenen Höhe und Schwankung der Amplitude des Balgdrucks einen Fahrtzustand. Sofern die Raddrehzahlsensoren keine Signale liefern, liegt ein Fehler vor und eine Störungsmeldung wird ausgegeben.

In einem anderen Fall wird von einem nicht gezeigten Anhängefahrzeug ausgegangen, etwa einem mehrachsigen Anhänger mit Deichsel und Drehschemel. Das Anhängefahrzeug befindet sich in einer Werkstatt zur Überprüfung. Das elektronische Bremssystem ist eingeschaltet, die Raddrehzahlsensoren sind ordnungsgemäß angeschlossen und liefern kein Geschwindigkeitssignal, da das Fahrzeug still steht. Eine Feststellbremse ist nicht betätigt. Der Balgdrucksensor liefert ein Signal mit hoher Amplitude, analog dem Verlauf a, jedoch mit geringerer Amplitudenvariation. Das Steuergerät des elektronischen Bremssystems erkennt an der geringen Amplitudenvariation den Stillstand des Fahrzeugs. Entsprechend wird keine Störungsmeldung zum Verhalten der Raddrehzahlsensoren ausgegeben.

Alternativ oder zusätzlich können in den genannten Beispielen Signale weiterer Sensoren zur Bewertung von Stillstand oder Fahrt herangezogen werden. Die Amplituden der Signale von Beschleunigungssensoren variieren in Fahrt deutlich stärker als bei Stillstand des Fahrzeugs. Wechselnde Bremsdrücke können ebenfalls auf einen Fahrzustand hinweisen, ebenso von der Zugmaschine zum Anhängefahrzeug übertragene Signale, wie Geschwindigkeit oder Signale der bereits genannten Sensoren, soweit diese auch am Zugfahrzeug vorhanden sind.

## Patentansprüche

1. Verfahren zur Steuerung eines elektronischen Bremssystems für Fahrzeuge (10, 11, 12), insbesondere für Anhängefahrzeuge (11, 12), wobei Signale von Raddrehzahlsensoren verarbeitet werden, wobei für eine Erkennung von Fahrt und/oder Stillstand zumindest Signale eines oder mehrerer Sensoren verarbeitet werden, die nicht Raddrehzahlsensoren sind, **dadurch gekennzeichnet, dass** für die Erkennung von Fahrt und/oder Stillstand Signale eines oder mehrerer Beladungssensoren verarbeitet werden.

2. Verfahren nach Anspruch 1, **dadurch gekennzeichnet, dass** die Signale der Sensoren, die nicht Raddrehzahlsensoren sind, verarbeitet werden, um Signale der Raddrehzahlsensoren oder daraus abgeleitete Fehlermeldungen zu verifizieren.

3. Verfahren nach Anspruch 1 oder 2, **dadurch gekennzeichnet, dass** für die Erkennung von Fahrt und/oder Stillstand Signale von mindestens einem Balgdrucksensor und/oder von mindestens einem Wegsensor als Signale eines oder mehrerer Beladungssensoren verarbeitet werden.

4. Verfahren nach Anspruch 1 oder einem der weiteren Ansprüche, **dadurch gekennzeichnet, dass** für die Erkennung von Fahrt und/oder Stillstand Signale eines oder mehrerer Beschleunigungssensoren verarbeitet werden, insbesondere von einem Querbeschleunigungssensor.

5. Verfahren nach Anspruch 1 oder einem der weiteren Ansprüche, **dadurch gekennzeichnet, dass** für die Erkennung von Fahrt und/oder Stillstand Signale eines oder mehrerer Bremsdrucksensoren verarbeitet werden.

6. Verfahren nach Anspruch 1 oder einem der weiteren Ansprüche, **dadurch gekennzeichnet, dass** für die Erkennung von Fahrt und/oder Stillstand Signale verarbeitet werden, welche dem Fahrzeug (10, 11, 12) über eine Schnittstelle von einem verbundenen Fahrzeug (10, 11, 12) zugeführt werden.

7. Verfahren nach Anspruch 1 oder einem der weiteren Ansprüche, **dadurch gekennzeichnet, dass** Amplitude und/oder Frequenz von Signalen der Sensoren ausgewertet werden, die nicht Raddrehzahlsensoren sind.

8. Verfahren nach Anspruch 1 oder einem der weiteren Ansprüche, **dadurch gekennzeichnet, dass** das Fahrzeug ein Anhängefahrzeug (11) ist, bei dem alle Achsen (14, 15) liftbar sind.

9. Steuergerät für ein elektronisches Bremssystem, mit Eingängen oder Schnittstellen für Signale von Raddrehzahlsensoren und mit Eingängen oder Schnittstellen für Signale von weiteren Sensoren, zur Durchführung des Verfahrens nach einem der Ansprüche 1 bis 8.

10. Elektronisches Bremssystem für ein Fahrzeug (10, 11, 12), insbesondere für ein Anhängefahrzeug (11, 12), mit einem Steuergerät nach Anspruch 9, Raddrehzahlsensoren und weiteren Sensoren, wobei Signale der Raddrehzahlsensoren verarbeitet werden, wobei für eine Erkennung von Fahrt und/oder Stillstand zumindest Signale eines oder mehrerer Sensoren verarbeitet werden, die nicht Raddrehzahlsensoren sind, **dadurch gekennzeichnet, dass** für die Erkennung von Fahrt und/oder Stillstand Signale eines oder mehrerer Beladungssensoren verarbeitet werden.

## Claims

1. Method for controlling an electronic braking system for vehicles (10, 11, 12), in particular for trailer vehicles (11, 12), wherein signals of wheel-speed sensors are processed, wherein at least signals of one or more sensors that are not wheel-speed sensors are processed for a detection of motion and/or standstill, **characterized in that** signals of one or more loading sensors are processed for the detection of motion and/or standstill.

2. Method according to Claim 1, **characterized in that** the signals of the sensors that are not wheel-speed sensors are processed in order to verify signals of the wheel-speed sensors or to verify error messages derived therefrom.

3. Method according to Claim 1 or 2, **characterized in that** signals of at least one bellows-pressure sensor and/or of at least one displacement sensor are processed as signals of one or more loading sensors for the detection of motion and/or standstill.

4. Method according to Claim 1 or one of the other claims, **characterized in that** signals of one or more acceleration sensors, in particular of a lateral-acceleration sensor, are processed for the detection of motion and/or standstill.

5. Method according to Claim 1 or one of the other claims, **characterized in that** signals of one or more brake-pressure sensors are processed for the detection of motion and/or standstill.

6. Method according to Claim 1 or one of the other claims, **characterized in that** signals that are supplied to the vehicle (10, 11, 12) via an interface of a linked vehicle (10, 11, 12) are processed for the detection of motion and/or standstill.

7. Method according to Claim 1 or one of the other claims, **characterized in that** the amplitude and/or frequency of signals of the sensors that are not wheel-speed sensors is/are evaluated.

8. Method according to Claim 1 or one of the other claims, **characterized in that** the vehicle is a trailer vehicle (11) in which all the axles (14, 15) are liftable.

9. Control unit for an electronic braking system, with inputs or interfaces for signals of wheel-speed sensors and with inputs or interfaces for signals of further sensors, for implementing the method according to one of Claims 1 to 8.

10. Electronic braking system for a vehicle (10, 11, 12), in particular for a trailer vehicle (11, 12), with a control unit according to Claim 9, with wheel-speed sensors and with further sensors, wherein signals of the wheel-speed sensors are processed, wherein at least signals of one or more sensors that are not wheel-speed sensors are processed for a detection of motion and/or standstill, **characterized in that** signals of one or more loading sensors are processed for the detection of motion and/or standstill.

## Revendications

1. Procédé de commande d'un système de freinage électronique pour des véhicules (10, 11, 12), en particulier pour des véhicules tractés (11, 12), dans lequel des signaux provenant de capteurs de vitesse de rotation de roue sont traités, dans lequel au moins des signaux provenant d'un ou de plusieurs capteurs, qui ne sont pas des capteurs de vitesse de rotation de roue, sont traités pour la reconnaissance de la marche et/ou de l'arrêt, **caractérisé en ce que** des signaux provenant d'un ou de plusieurs capteurs de chargement sont traités pour la reconnaissance de la marche et/ou de l'arrêt.

2. Procédé selon la revendication 1, **caractérisé en ce que** les signaux des capteurs, qui ne sont pas des capteurs de vitesse de rotation de roue, sont traités pour vérifier les signaux des capteurs de vitesse de rotation de roue ou des messages d'erreur dérivés de ceux-ci.

3. Procédé selon la revendication 1 ou 2, **caractérisé en ce que** des signaux provenant d'au moins un capteur de pression de coussin d'air et/ou d'au moins un capteur de course sont traités en tant que signaux provenant d'un ou de plusieurs capteurs de chargement pour la reconnaissance de la marche et/ou de l'arrêt.

4. Procédé selon la revendication 1 ou l'une des autres revendications, **caractérisé en ce que** des signaux provenant d'un ou de plusieurs capteurs d'accélération, en particulier d'un capteur d'accélération transversale, sont traités pour la reconnaissance de la marche et/ou de l'arrêt.

5. Procédé selon la revendication 1 ou l'une des autres revendications, **caractérisé en ce que** des signaux provenant d'un ou de plusieurs capteurs de pression de freinage sont traités pour la reconnaissance de la marche et/ou de l'arrêt.

6. Procédé selon la revendication 1 ou l'une des autres revendications, **caractérisé en ce que** des signaux qui sont amenés au véhicule (10, 11, 12) par l'intermédiaire d'une interface d'un véhicule associé (10, 11, 12) sont traités pour la reconnaissance de la marche et/ou de l'arrêt.

7. Procédé selon la revendication 1 ou l'une des autres revendications, **caractérisé en ce que** l'amplitude et/ou la fréquence des signaux provenant des capteurs, qui ne sont pas des capteurs de vitesse de rotation de roue, sont évaluées.

8. Procédé selon la revendication 1 ou l'une des autres revendications, **caractérisé en ce que** le véhicule est un véhicule tracté (11) dans lequel tous les essieux (14, 15) peuvent être relevés.

9. Appareil de commande pour un système de freinage électronique, comprenant des entrées ou des interfaces destinées à des signaux provenant de capteurs de vitesse de rotation de roue et des entrées ou des interfaces destinées à des signaux provenant d'autres capteurs pour effectuer le procédé selon l'une quelconque des revendications 1 à 8.

10. Système de freinage électronique pour un véhicule (10, 11, 12), en particulier un véhicule tracté (11, 12), comprenant un appareil de commande selon la revendication 9, des capteurs de vitesse de rotation de roue et d'autres capteurs, des signaux provenant des capteurs de vitesse de rotation de roue étant traités, dans lequel au moins des signaux provenant d'un ou de plusieurs capteurs, qui ne sont pas des capteurs de vitesse de roue, sont traités pour la reconnaissance de la marche et/ou de l'arrêt, **caractérisé en ce que** des signaux provenant d'un ou de plusieurs capteurs de chargement sont traités pour la reconnaissance de la marche et/ou de l'arrêt.
